# EUROPÄISCHE PATENTSCHRIFT

(11) **EP 2 981 467 B1**
(45) Veröffentlichungstag und Bekanntmachung des Hinweises auf die Patenterteilung: **30.01.2019**
(21) Anmeldenummer: 14715237.5
(22) Anmeldetag: 27.03.2014
(51) Int. Cl.: B64D 11/06, A47C 7/54, B61D 33/00, B60N 2/70, B60N 2/75

(54) **ARMLEHNENVORRICHTUNG**
ARMREST
ACCOUDOIR

(30) Priorität: 04.04.2013 DE 102013103382
(43) Veröffentlichungstag der Anmeldung: 10.02.2016
(73) Patentinhaber: Recaro Aircraft Seating GmbH & Co. KG, 74523 Schwäbisch Hall (DE)
(72) Erfinder: TUTE, Christopher, 67808 Schönborn (DE); SCHMIDT, Marc, 74523 Schwäbisch Hall (DE)
(74) Vertreter: Daub, Thomas
(86) Internationale Anmeldenummer: PCT/EP2014/056142
(87) Internationale Veröffentlichungsnummer: WO 2014/161765

(56) Entgegenhaltungen:
- WO-A1-2010/108690
- WO-A1-2011/143680
- DE-A1-102004 027 867
- DE-A1-102008 034 529
- US-A1- 2009 256 384
- US-A1- 2010 117 415
- US-B1- 6 343 839

## Beschreibung

### Stand der Technik

Die Erfindung betrifft eine Armlehnenvorrichtung nach dem Oberbegriff des Patentanspruchs 1. US6343839 B1 und DE 102004027867 A1 zeigen Armlehnenvorrichtungen mit Polstereinheiten, welche eine Komfortstruktur und ein Inlay aufweisen.

Die Aufgabe der Erfindung besteht insbesondere darin, eine gattungsgemäße Vorrichtung mit verbesserten Eigenschaften hinsichtlich Komfort, Haptik und Variabilität, insbesondere im Bezug auf eine Farbe, bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Armlehnenvorrichtung für einen Flugzeugsitz, mit einer Polstereinheit, die zumindest im Wesentlichen aus einem Elastomer gebildet ist und die zumindest zur Bildung eines elastischen Untergrunds für eine Armauflage für einen Gast vorgesehen ist.

Es wird vorgeschlagen, dass die Polstereinheit eine Komfortstruktur aufweist, die zur Einstellung einer elastischen Verformbarkeit der Polstereinheit vorgesehen ist. Unter einer "Polstereinheit" soll dabei insbesondere eine Einheit einer Armlehne verstanden werden, die durch ihre Eigenschaften einen weichen und elastisch verformbaren Untergrund der Armlehne bildet, auf der eine Person ihren Arm ablegen kann, wobei die Polstereinheit dabei vorzugsweise einstückig und aus einem einzigen Material, wie insbesondere aus einem Elastomer, gebildet ist. Dabei weist die Polstereinheit eine Dicke von maximal 20 Millimetern, vorzugsweise von maximal 10 Millimetern und in einer besonders vorteilhaften Ausgestaltung eine Dicke von weniger als 5 Millimetern auf. Unter einem "Elastomer" soll dabei insbesondere ein Kautschuk, ein thermoplastisches Elastomer, wie beispielsweise ein TPU, oder ein Silikon verstanden werden. Unter einer "Armauflage für einen Gast" soll insbesondere ein Bereich einer Armlehne eines Sitzes verstanden werden, auf der ein Gast, während er auf dem Sitz sitzt, seinen Arm ablegen kann. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Komfortstruktur" soll dabei insbesondere eine Struktur verstanden werden, die in die Polstereinheit eingebracht wird und die durch ihre Ausgestaltung eine elastische Verformbarkeit beeinflusst. Dabei ist die Struktur vorzugsweise von einer oder von mehreren Taschen oder Nuten ausgebildet. Dabei weisen die Taschen oder Nuten, die die Komfortstruktur ausbilden, eine Tiefe auf, die 80% der Dicke der Polstereinheit, vorteilhaft weniger als 60% der Dicke der Polstereinheit und in einer besonders vorteilhaften Ausgestaltung 50% der Dicke der Polstereinheit entspricht. Dabei kann insbesondere vorteilhaft durch unterschiedliche Ausgestaltung der Komfortstruktur in verschiedenen Bereichen der Polstereinheit eine unterschiedliche Verformbarkeit, also Härte der Polstereinheit in verschiedenen Bereichen, erreicht werden. Unter einer "Einstellung einer elastischen Verformbarkeit" soll dabei insbesondere verstanden werden, dass durch eine Ausgestaltung der Komfortstruktur eine elastische Verformbarkeit, also eine Härte der Polstereinheit, erhöht oder verringert und dadurch auf eine für die gewünschte Anwendung vorteilhafte und gewünschte elastische Verformbarkeit eingestellt werden kann. So kann eine Härte und dadurch ein Komfort der Polstereinheit besonders einfach und kostengünstig an verschiedene Ausführungen der Armlehnenvorrichtung angepasst werden.

Durch eine erfindungsgemäße Ausgestaltung kann besonders vorteilhaft ein hohes Maß an Komfort, Haptik und Variabilität der Armlehnenvorrichtung erreicht werden. Eine Farbe, eine Haptik und eine elastische Eigenschaft der Polstereinheit können für verschiedene Sitze, insbesondere für verschiedene Flugzeugsitze verschiedener Airlines oder für unterschiedliche Ausstattungen, einfach und kostengünstig angepasst werden. Dabei ist insbesondere die Auswahl und Verwendung von unterschiedlichen Farben für verschiedene Armlehnen durch die Verwendung von Silikon vorteilhaft, da das Silikon unabhängig von einer speziellen Farbe gesetzlichen Bestimmungen, insbesondere für einen Brandschutz im Flugzeugbau, gerecht wird.

Weiter wird vorgeschlagen, dass die Polstereinheit eine Auflagefläche aufweist und die Komfortstruktur auf einer der Auflagefläche abgewandten Seite der Polstereinheit angeordnet ist. Unter einer "Auflagefläche" soll dabei insbesondere eine Fläche der Polstereinheit verstanden werden, die auf einer einem Rahmen einer Armlehne, auf der die Polstereinheit angebracht ist, abgewandten Seite angeordnet ist, und die eine Fläche ausbildet, die zur Auflage eines Armes durch eine auf dem Sitz mit der Armlehne sitzende Person vorgesehen ist. Dadurch kann die Komfortstruktur besonders vorteilhaft und einfach angeordnet werden.

Des Weiteren wird vorgeschlagen, dass die Komfortstruktur von einer filigranen Struktur gebildet ist. Unter einer "filigranen Struktur" soll dabei insbesondere eine Struktur aus aneinander angrenzenden Taschen oder einer oder mehreren durchgehenden Nuten verstanden werden, die sich über eine gesamte Fläche der Komfortstruktur erstrecken. Dadurch kann die Komfortstruktur einfach ausgebildet werden.

Zudem wird vorgeschlagen, dass die Komfortstruktur als eine ebene Polygonnetzstruktur ausgebildet ist. Unter einer "ebenen Polygonnetzstruktur" soll dabei insbesondere eine Struktur aus nebeneinander angeordneten Taschen verstanden werden, die jeweils eine Polygonform aufweisen. Dabei ist es denkbar, dass die ebene Polygonnetzstruktur beispielsweise als eine Anordnung von aneinander angrenzenden rechteckigen, quadratischen oder dreieckigen Taschen ausgebildet ist. Vorzugsweise ist die ebene Polygonnetzstruktur als eine Wabenstruktur ausgebildet, die aus aneinander angrenzenden, vorzugsweise gleichseitigen, sechseckigen Taschen gebildet ist. Dabei weist die als Wabenstruktur ausgebildete ebene Polygonnetzstruktur vorzugsweise eine Breite von 5 mm und eine Wanddicke von 1,5 mm auf. Dadurch kann die Komfortstruktur besonders vorteilhaft ausgebildet werden.

Weiterhin wird vorgeschlagen, dass die Polstereinheit zumindest im Wesentlichen aus einem Silikon gebildet ist. Unter "zumindest im Wesentlichen" soll dabei insbesondere verstanden werden, dass die Polstereinheit zumindest zu 60%, vorzugsweise zu 90% und in einer besonders vorteilhaften Ausgestaltung gänzlich aus einem Silikon gebildet ist. Unter einem "Silikon" soll hierbei insbesondere ein Silikonelastomer verstanden werden, das insbesondere eine gummielastische Masse ausbildet.

Weiter wird vorgeschlagen, dass die Armlehnenvorrichtung eine Beschichtung aufweist, die die Polstereinheit zum Schutz zumindest teilweise umschließt. Unter einer "Beschichtung" soll insbesondere eine auf die Armlehnenvorrichtung aufgebrachte Schicht verstanden werden, die zumindest zur Verbesserung von haptischen Eigenschaften der Armlehnenvorrichtung vorgesehen ist. Dabei ist die Beschichtung stoffschlüssig, formschlüssig und/oder mittels einer adhäsiven Verbindung fest mit der Polstereinheit verbunden. Dabei ist die Beschichtung vorzugsweise von einer dünnen Schicht Lack gebildet, die in einem geeigneten Verfahren auf die als Silikon gebildete Polstereinheit aufgebracht ist und dabei eine stoffschlüssige Verbindung mit der Postereinheit eingeht und/oder adhäsiv mit der Polstereinheit verbunden wird. Grundsätzlich ist es ebenfalls denkbar, dass die Beschichtung als ein Bezug aus einem Stoff, einem Leder oder einem anderen, dem Fachmann als sinnvoll erscheinenden natürlich oder künstlich hergestellten Bezug gebildet ist, die auf die aus Silikon gebildete Polstereinheit aufgezogen ist. Unter "zumindest teilweise umschließen" soll dabei insbesondere verstanden werden, dass die Beschichtung die Polstereinheit zumindest auf der von der Polstereinheit gebildeten Auflagefläche und auf Flächen, die in einem voll montierten Zustand von einem Gast eingesehen und/oder berührt werden können, komplett bedeckt. Dabei ist die Polstereinheit vorzugsweise komplett von der Beschichtung überzogen. Dadurch kann eine Haptik der Armlehnenvorrichtung besonders vorteilhaft beeinflusst werden und dadurch insbesondere ein Komfort für einen Gast erhöht werden.

Ferner wird gemäß der Erfindung nach Anspruch 1 vorgeschlagen, dass die Armlehnenvorrichtung ein Inlay umfasst, das von der zumindest im Wesentlichen aus einem Silikon gebildeten Polstereinheit zumindest im Wesentlichen umgeben ist. Unter einem "Inlay" soll dabei insbesondere eine Trägerstruktur verstanden werden, die insbesondere in einem frühen Produktionsstadium der Armlehnenvorrichtung als ein separates Einzelteil gebildet ist, das während eines Produktionsschrittes fest mit der Polstereinheit verbunden wird. Das Inlay ist dabei als Trägerstruktur für die Polstereinheit ausgebildet und weist vorzugsweise Anbindungselemente auf, mittels derer die Armlehnenvorrichtung fest an einem Rahmen einer Armlehne befestigbar ist. Unter "zumindest im Wesentlichen umgeben" soll dabei insbesondere verstanden werden, dass das Inlay zumindest zu 50%, vorzugsweise zumindest über eine gesamte, der Auflagefläche der Polstereinheit zugewandte Seite von der Polstereinheit bedeckt ist. Dabei ist das Inlay gemäß der Erfindung nach Anspruch 1 mittels einer formschlüssigen, adhäsiven und/oder stoffschlüssigen Verbindung mit der Polstereinheit verbunden. Dadurch kann eine elastische Verformbarkeit der Armlehnenvorrichtung und damit ein Komfort besonders vorteilhaft eingestellt werden.

Weiter wird vorgeschlagen, dass das Inlay zumindest im Wesentlichen aus einem hochtemperaturbeständigen Material gebildet ist. Unter einem "hochtemperaturbeständigen Material" soll dabei insbesondere ein Material verstanden werden, das bis zu einer Temperatur von 180 Grad Celsius und in einer besonders vorteilhaften Ausgestaltung bis zu einer Temperatur von 280 Grad Celsius formstabil ist. Dabei ist das hochtemperaturbeständige Material vorzugsweise von einem hochtemperaturbeständigen Kunststoff gebildet, wie beispielsweise einem Polyamid oder Polycarbonat. Grundsätzlich ist aber auch denkbar, dass das hochtemperaturbeständige Material aus einem Metall, wie beispielsweise Aluminium, oder einem anderen natürlichen oder künstlichen Material gebildet ist, das bis zu einer Temperatur von 180 Grad Celsius oder besonders vorteilhaft bis zu einer Temperatur von 280 Grad Celsius formstabil ist. Dadurch kann das Inlay, insbesondere für eine Herstellung der Armlehnenvorrichtung aus einem Silikon, besonders vorteilhaft ausgestaltet werden.

Des Weiteren wird vorgeschlagen, dass das Inlay zumindest im Wesentlichen aus einem Faserverbundwerkstoff gebildet ist. Unter "zumindest im Wesentlichen aus einem Faserverbundwerkstoff gebildet" soll dabei insbesondere verstanden werden, dass das Inlay vorzugsweise zu 60%, besonders vorteilhaft zu 90% und in einer besonders vorteilhaften Ausgestaltung komplett aus einem Faserverbundwerkstoff gebildet ist. Unter einem "Faserverbundwerkstoff" soll dabei insbesondere ein zumindest zwei Hauptkomponenten umfassender Mehrphasenwerkstoff verstanden werden, der zumindest eine bettende Matrix sowie verstärkende Fasern aufweist. Die bettende Matrix kann vorzugsweise aus einem Kunststoff, einem Harz und/oder einem weiteren, dem Fachmann als sinnvoll erscheinenden Material gebildet sein und die Fasern können aus Kunststofffasern, Glasfasern, Kohlenstofffasern, Naturfasern und/oder anderen, dem Fachmann als sinnvoll erscheinenden Fasern gebildet sein. Dadurch kann das Inlay insbesondere mit einem guten Steifigkeits-Gewichtsverhältnis ausgebildet werden.

Weiter wird ein Sitz mit einer erfindungsgemäßen Armlehnenvorrichtung vorgeschlagen. Der Sitz ist dabei vorzugsweise als ein Fluggastsitz zur Montage in einem Flugzeug ausgebildet, grundsätzlich ist es aber auch denkbar, dass der Sitz als ein Autositz, als ein Bürostuhl, ein Sessel oder als ein anderer, dem Fachmann als sinnvoll erscheinender Sitz ausgebildet ist.

Die erfindungsgemäße Armlehnenvorrichtung ist durch die Ansprüche definiert und soll hierbei nicht auf die hier beschriebene Anwendung und Ausführungsform beschränkt sein. Insbesondere kann innerhalb des durch die Ansprüche definierten Gegenstandes die erfindungsgemäße Armlehnenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Schnittansicht durch eine erfindungsgemäße Armlehnenvorrichtung in einem ersten Ausführungsbeispiel auf einer Grundplatte einer Armlehne,
- Fig. 2: die Armlehnenvorrichtung und die Grundplatte in einer schematischen Explosionsansicht,
- Fig. 3: eine erfindungsgemäße Armlehnenvorrichtung in einem zweiten Ausführungsbeispiel,
- Fig. 4: die Armlehnenvorrichtung in dem zweiten Ausführungsbeispiel in einer Explosionsansicht und
- Fig. 5: eine schematische Darstellung der Armlehnenvorrichtung in dem zweiten Ausführungsbeispiel mit einem Ausschnitt.

### Beschreibung der Ausführungsbeispiele

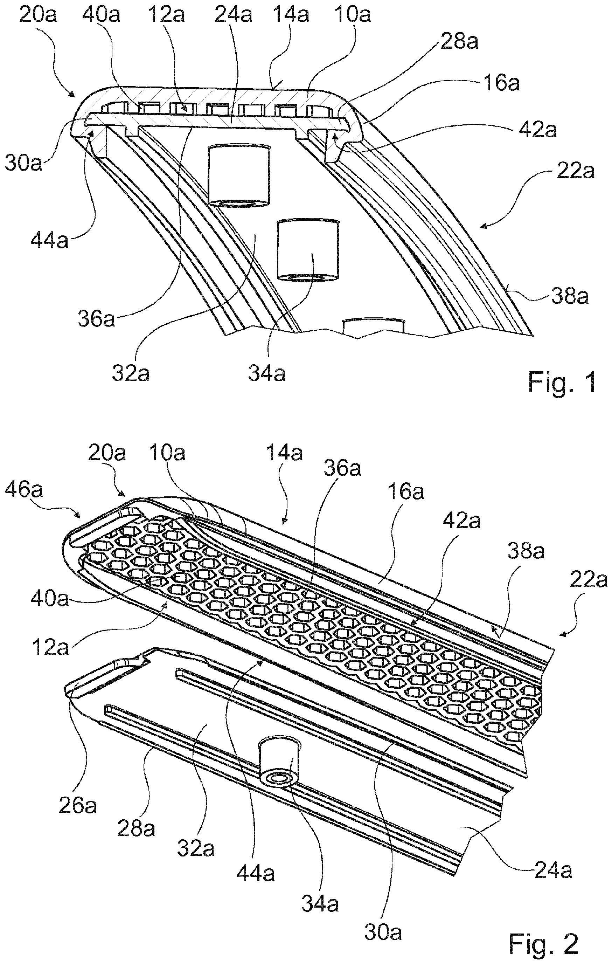

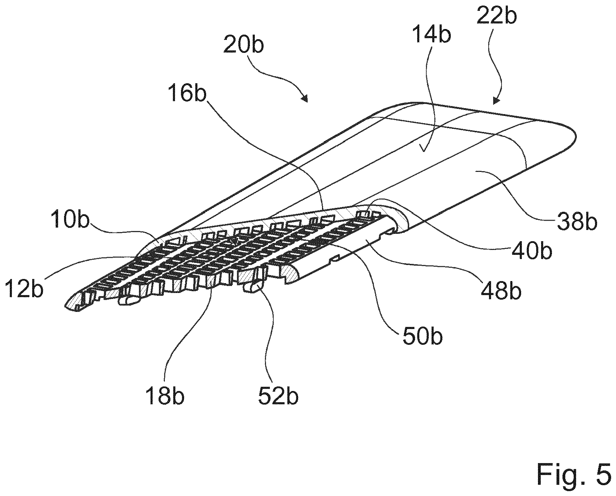

Figuren 1 und 2 zeigen ein erstes Ausführungsbeispiel einer erfindungsgemäßen Armlehnenvorrichtung 20a. Die Armlehnenvorrichtung 20a ist als Teil eines nicht näher dargestellten Sitzes ausgebildet. Der Sitz ist dabei als ein Flugzeugsitz ausgebildet. Der als Flugzeugsitz ausgebildete Sitz weist eine Rückenlehne zu einer Abstützung eines Rückens eines Gasts auf. Zudem weist der Sitz einen Sitzboden auf, der eine Sitzfläche für den Gast ausbildet. Der Sitz weist eine Aufständereinheit auf, an der die Rückenlehne und der Sitzboden angeordnet sind. Zudem ist der als Flugzeugsitz ausgebildete Sitz mittels der Aufständereinheit auf einem Boden einer Passagierkabine aufgeständert. Außerdem weist der Sitz seitlich der Sitzflächen jeweils eine Armlehne 22a auf, die zur Ausbildung einer Armauflage für einen Gast vorgesehen ist. Die Armlehnen 22a begrenzen den Sitzboden seitlich und bieten dem Gast eine Möglichkeit, seine Arme während des Sitzens aufzulegen. Die Armlehnen 22a weisen dabei jeweils einen nicht näher dargestellten Rahmen auf, der sich von dem Sitzboden aus in eine Richtung von dem Boden, auf dem der Flugzeugsitz aufgeständert ist, wegerstreckt. Die Armlehnenvorrichtung 20a ist Teil der lediglich teilweise dargestellten Armlehne 22a und an dem Rahmen der Armlehne 22a befestigt, um eine Auflagefläche 14a für einen Arm einer auf dem Sitz sitzenden Person auszubilden. Der Rahmen der Armlehne 22a weist eine Grundplatte 24a auf, die eine Grundfläche der Armlehne 22a ausbildet. Eine Grundfläche der Armlehne 22a ist dabei in etwa rechteckig ausgebildet, wobei sie eine lange Seite und eine kurze Seite aufweist. Die lange Seite der Grundfläche der Armlehne 22a ist dabei in einem montierten Zustand parallel zu einer Sitzrichtung ausgerichtet. Dabei ist es denkbar, dass die Grundfläche der Armlehne 22a über ihre längere Seite, also ihre Längserstreckung, unterschiedliche Breiten aufweist. Grundsätzlich ist es dabei denkbar, dass die Grundfläche der Armlehne 22a in ihrer Längserstreckung und/oder in ihrer Erstreckung in eine Breite gewölbt ist. Dabei ist im Folgenden ein der Rückenlehne zugewandtes Ende der Grundplatte 24a als ein hinteres Ende, ein der Rückenlehne abgewandtes Ende der Grundplatte 24a als ein vorderes Ende 26a, eine dem Sitzboden zugewandte Seite als innere Seite 28a und eine dem Sitzboden abgewandte Seite als äußere Seite 30a der Grundplatte 24a bezeichnet. An einer dem Boden der Passagierkabine zugewandten Unterseite 32a der Grundplatte 24a weist diese mehrere Befestigungsdome 34a auf, über die die Grundplatte 24a mittels einer Schraubverbindung fest mit dem Rahmen der Armlehne 22a verbunden ist. Die Armlehnenvorrichtung 20a ist in einem montierten Zustand auf der Grundplatte 24a des Rahmens der Armlehne 22a angebracht. Im Folgenden werden Bauteile, Einheiten und/oder Elemente, deren Anzahl größer als eins ist, in den Fig. 1 bis 5 jeweils nur mit einem Bezugszeichen versehen.

Die Armlehnenvorrichtung 20a umfasst eine Polstereinheit 10a. Die Polstereinheit 10a ist zur Bildung eines elastischen Untergrunds für die Armauflage des Gastes vorgesehen. Dabei weist die Polstereinheit 10a eine Form der Armlehne 22a auf. Die Polstereinheit weist eine Dicke von 4 Millimetern auf. In einem montierten Zustand erstreckt sich die Polstereinheit 10a über die gesamte Grundfläche der Grundplatte 24a der Armlehne 22a. An dem vorderen und dem hinteren Ende 26a sowie an der inneren und der äußeren Seite 28a, 30a umgreift die Polstereinheit 10a die Grundplatte 24a, wodurch die Polstereinheit 10a die Grundplatte 24a in einem für einen Gast berührbaren Bereich völlig umschließt. Die Polstereinheit 10a weist eine im montierten Zustand der Grundplatte 24a zugewandte Innenseite 36a auf, mit der die Polstereinheit 10a auf der Grundplatte 24a aufliegt. Eine Außenseite 38a der Polstereinheit 10a ist auf der der Innenseite 36a gegenüberliegenden Seite der Polstereinheit 10a angeordnet und begrenzt die Polstereinheit 10a nach außen. Die Außenseite 38a der Polstereinheit 10a ist dabei im Wesentlichen eben ausgebildet. Grundsätzlich ist es auch denkbar, dass die Außenseite 38a zur Veränderung einer Haptik ein Muster von Erhöhungen und/oder Vertiefungen aufweist. Eine sich parallel zu der Grundplatte 24a erstreckende Fläche der Außenseite 38a der Polstereinheit 10a ist als eine Auflagefläche 14a ausgebildet. Die Polstereinheit 10a ist aus einem Silikon gebildet. Dabei ist die Polstereinheit 10a vollständig aus einem Silikon gebildet. Das Silikon ist dabei als ein Silikonelastomer ausgebildet. Dabei weist das als Silikonelastomer ausgebildete Silikon eine Shorehärte von 50 Shore A auf. Grundsätzlich ist es auch denkbar, dass das Silikon eine andere, dem Fachmann als sinnvoll erscheinende Shorehärte, wie beispielsweise eine Shorehärte von 40 Shore A oder 70 Shore A aufweist. Die aus Silikon gebildete Polstereinheit 10a weist dabei eine feste Struktur und eine elastische Verformbarkeit auf. Durch eine Krafteinwirkung von außen, beispielsweise durch Auflegen eines Armes, verformt sich die aus Silikon gebildete Polstereinheit 10a elastisch. Nach Wegfallen der von außen aufgebrachten Kraft begibt sich die Polstereinheit 10a aus ihrem elastisch ausgelenkten Zustand wieder in ihren Normalzustand.

Zur Einstellung einer elastischen Verformbarkeit weist die Polstereinheit 10a eine Komfortstruktur 12a auf. Dabei ist die Komfortstruktur 12a von einer filigranen Struktur gebildet. Die Komfortstruktur 12a ist als eine Struktur von aneinander angrenzenden Taschen 40a ausgebildet. Durch die Komfortstruktur 12a wird eine elastische Verformbarkeit der Polstereinheit 10a erhöht, da das Material der Polstereinheit 10a bei Belastung in die durch die Komfortstruktur 12a gebildeten Hohlräume ausweichen kann. Durch Änderung der Größe und Form der Komfortstruktur 12a kann dabei für unterschiedliche Armlehnenvorrichtungen, die beispielsweise unterschiedliche Komfortanforderungen erfüllen und dazu unterschiedliche elastische Verformbarkeiten aufweisen müssen, die elastische Verformbarkeit einfach eingestellt werden. Dabei ist die Komfortstruktur 12a auf einer der Auflagefläche 14a der Polstereinheit 10a abgewandten Seite, und zwar der Unterseite 32a der Polstereinheit 10a angeordnet. Dadurch ist die Komfortstruktur 12a von außen von einem Gast vorzugsweise nicht einsehbar.

Dabei ist die Komfortstruktur 12a als eine ebene Polygonnetzstruktur ausgebildet. Die Komfortstruktur 12a bildet aneinander angrenzende wabenförmige Taschen 40a aus, die die gesamte Komfortstruktur 12a ausbilden. Dabei erstreckt sich die Komfortstruktur 12a über die gesamte Unterseite 32a der Polstereinheit 10a. Dabei ist es auch denkbar, dass Bereiche der Unterseite 32a der Polstereinheit 10a keine Komfortstruktur 12a aufweisen und/oder, dass die Komfortstruktur 12a in Teilbereichen der Unterseite 32a der Polstereinheit 10a eine andere Form und/oder Größe aufweist als in anderen Teilbereichen, wodurch eine elastische Verformbarkeit für unterschiedliche Teilbereiche der Polstereinheit 10a unterschiedlich eingestellt werden kann. Dabei weisen die Taschen 40a eine Tiefe von zwei Millimetern auf, um die sich die Taschen 40a in die Polstereinheit erstrecken.

Zur Verbesserung einer Haptik und zum Schutz der Polstereinheit 10a weist die Armlehnenvorrichtung 20a eine Beschichtung 16a auf, die die Polstereinheit 10a umschließt. Dabei umschließt die Beschichtung 16a die Polstereinheit 10a komplett an der Außenseite 38a und der Innenseite. Grundsätzlich ist es auch denkbar, dass die Beschichtung 16a die Polstereinheit 10a lediglich an der Außenseite 38a, die von einem Gast berührt und/oder gesehen werden kann, komplett umschließt. Die Beschichtung 16a ist dabei als ein Silikonlack ausgebildet. Der Silikonlack wird dabei in einem Herstellungsprozess der Armlehnenvorrichtung 20a auf die Polstereinheit 10a aufgebracht und geht dabei eine stoffschlüssige Verbindung mit der Polstereinheit 10a ein. Grundsätzlich ist es auch denkbar, dass die Beschichtung 16a aus einem dünnen Material gebildet ist, das auf die Polstereinheit 10a aufgezogen ist, wie beispielsweise einem Stoff oder Leder. Dabei wird die Beschichtung 16a formschlüssig und oder durch eine adhäsive Verbindung mit der Polstereinheit 10a verbunden.

Zur Anbindung der Armlehnenvorrichtung 20a an die Grundplatte 24a der Armlehne 22a weist die Armlehnenvorrichtung 20a eine Formschlusseinheit auf. Die Formschlusseinheit umfasst mehrere Formschlusselemente 42a, 44a, 46a, die die Armlehnenvorrichtung 20a in montiertem Zustand fest an die Grundplatte 24a anbinden. Die Formschlusselemente 42a, 44a, 46a der Armlehnenvorrichtung 20a sind dabei einstückig mit der aus Silikon gebildeten Polstereinheit 10a ausgebildet. Dabei ist ein Formschlusselement 42a an einer inneren Seite, ein Formschlusselement 44a an einer äußeren Seite, ein Formschlusselement 46a an einem vorderen Ende und ein Formschlusselement an einem hinteren Ende der Polstereinheit 10a angeordnet. Die zu den Formschlusselementen 42a, 44a, 46a der Armlehnenvorrichtung 20a korrespondierend ausgebildeten Formschlusselemente sind von den jeweiligen Seiten 28a, 30a und Enden 26a der Grundplatte 24a ausgebildet, die in montiertem Zustand von der Polstereinheit 10a umschlossen sind. Die Formschlusselemente 42a, 44a, 46a der Armlehnenvorrichtung 20a umgreifen die entsprechenden von den Enden 26a und Seiten 28a, 30a der Grundplatte 24a gebildeten Formschlusselemente in einem montierten Zustand und binden die Polstereinheit 10a und damit die Armlehnenvorrichtung 20a so fest an die Grundplatte 24a der Armlehne 22a an. Dabei wird die aus Silikon gebildete Polstereinheit 10a während einer Montage elastisch so weit gedehnt, dass die Formschlusselemente 42a, 44a, 46a der Armlehnenvorrichtung 20a in die Formschlusselemente der Grundplatte 24a eingreifen und die Polstereinheit 10a die Grundplatte 24a komplett umschließt. Durch Wegnahme einer Montagekraft, die die Polstereinheit 10a zur Ausrichtung der Formschlusselemente 42a, 44a, 46a elastisch gedehnt hat, zieht sich die Polstereinheit 10a wieder zusammen und wird dadurch mit den Formschlusselementen 42a, 44a, 46a in die Formschlusselemente der Grundplatte 24a gedrückt, wodurch eine Haltekraft zwischen den Formschlusselementen 42a, 44a, 46a der Armlehnenvorrichtung 20a und der Grundplatte 24a erzeugt wird. Dadurch ist die Armlehnenvorrichtung 20a fest und sicher mit der Grundplatte 24a verbunden. Grundsätzlich ist es auch denkbar, dass zur Sicherung der Armlehnenvorrichtung 20a gegen unbeabsichtigtes oder unautorisiertes Entfernen der Armlehnenvorrichtung 20a von der Grundplatte 24a der Armlehne 22a ein Sicherungselement, beispielsweise eine Schraube, die Armlehnenvorrichtung 20a zusätzlich zu den Formschlusselementen 42a, 44a, 46a an die Grundplatte 24a anbindet.

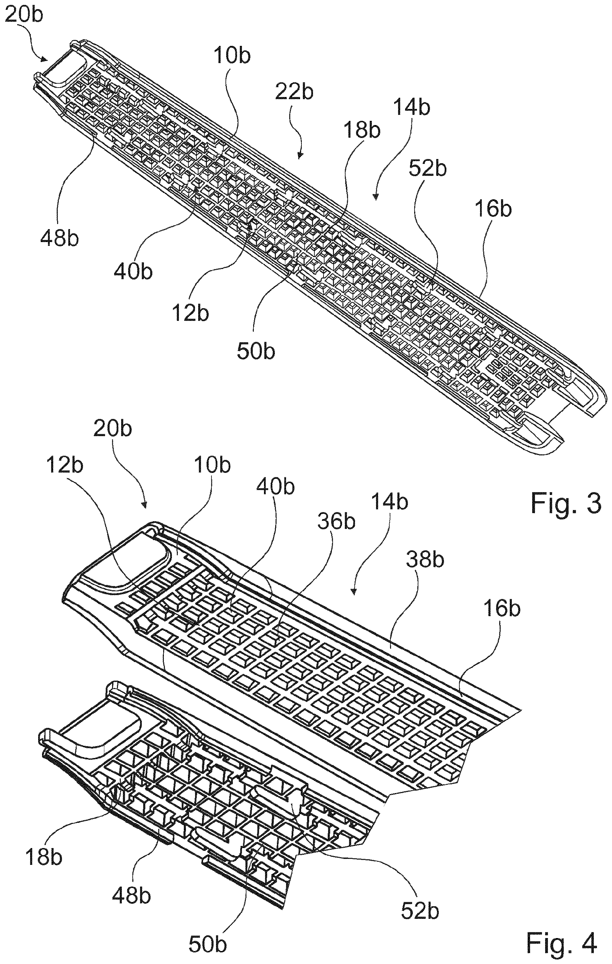

In Fig. 3 bis 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 und 2, verwiesen werden kann. Zur Unterscheidung der Ausführungsbeispiele ist der Buchstabe a den Bezugszeichen des Ausführungsbeispiels in Fig. 1 und 2 nachgestellt. In dem Ausführungsbeispiel der Fig. 3 bis 5 ist der Buchstabe a durch den Buchstaben b ersetzt.

Figuren 3 bis 5 zeigen ein zweites Ausführungsbeispiel einer erfindungsgemäßen Armlehnenvorrichtung 20b. Die Armlehnenvorrichtung 20b ist als Teil eines nicht näher dargestellten Sitzes ausgebildet. Die Armlehnenvorrichtung 20b ist Teil einer lediglich teilweise dargestellten Armlehne 22b und an einem Rahmen der Armlehne 22b befestigt, um eine Auflagefläche für eine auf dem Sitz sitzende Person auszubilden. Der Rahmen der Armlehne 22b weist eine nicht näher dargestellte Grundplatte auf, die eine Grundfläche der Armlehne 22b ausbildet.

Die Armlehnenvorrichtung 20b umfasst eine Polstereinheit 10b. Die Polstereinheit 10b ist zur Bildung eines elastischen Untergrunds für die Armauflage des Gastes vorgesehen. Dabei weist die Polstereinheit 10b eine Form der Armlehne 22b auf. In einem montierten Zustand erstreckt sich die Polstereinheit 10b über die gesamte Grundfläche der Grundplatte der Armlehne 22b. Zur Einstellung einer elastischen Verformbarkeit weist die Polstereinheit 10b eine Komfortstruktur 12b auf. Die Komfortstruktur 12b ist als eine Struktur von aneinander angrenzenden Taschen ausgebildet. Dabei ist die Komfortstruktur 12b als eine ebene Polygonnetzstruktur ausgebildet. Die Komfortstruktur 12b bildet aneinander angrenzende rechteckige Taschen aus, die die gesamte Komfortstruktur 12b ausbilden. Dabei erstreckt sich die Komfortstruktur 12b über eine gesamte Unterseite der Polstereinheit 10b.

Die Armlehnenvorrichtung 20b umfasst ein Inlay 18b. Das Inlay 18b ist von der aus Silikon gebildeten Polstereinheit 10b teilweise umgeben. Das Inlay 18b weist im Wesentlichen die Form der Grundplatte der Armlehne 22b auf. Das Inlay 18b weist einen Rahmen 48b auf, der das Inlay 18b an einer inneren Seite, einer äußeren Seite, einem vorderen Ende und an einem hinteren Ende begrenzt. Der Rahmen 48b des Inlays 18b ist dabei aus Vollmaterial gebildet. Der Rahmen 48b umschließt einen Mittelbereich des Inlays 18b komplett. Der Mittelbereich des Inlays 18b ist dabei von einer Gitterstruktur 50b gebildet. Die Gitterstruktur 50b ist korrespondierend zu der Komfortstruktur 12b der Polstereinheit 10b ausgebildet. Die Gitterstruktur 50b ist aus aneinander angrenzenden Rechtecken gebildet. Das Inlay 18b ist in einem vormontierten Zustand form- und stoffschlüssig mit der Polstereinheit 10b verbunden. Während eines Herstellungsprozesses der Armlehnenvorrichtung 20b wird zunächst das Inlay 18b gefertigt. Das Inlay 18b wird dann, vorzugsweise in einem ausgehärteten Zustand, von der aus Silikon gebildeten Polstereinheit 10b umspritzt. Dabei wird die Komfortstruktur 12b der Polstereinheit 10b durch ein Durchspritzen durch die Gitterstruktur 50b des Inlays 18b erreicht. Die Polstereinheit 10b verbindet sich dabei während der Herstellung adhäsiv, stoffschlüssig und/oder formschlüssig mit dem Inlay 18b der Armlehnenvorrichtung 20b.

Zur sicheren Herstellung der Armlehnenvorrichtung ist das Inlay 18b aus einem hochtemperaturbeständigen Material gebildet. Das Inlay 18b ist dabei aus einem Faserverbundwerkstoff gebildet, der aus einer bettenden Matrix und in der Matrix gebetteten Glasfasern gebildet ist. Dabei ist das Inlay 18b, das aus dem hochtemperaturbeständigen Faserverbundwerkstoff gebildet ist, bis zu Temperaturen von 280 Grad Celsius formstabil, wodurch ein Temperungsprozess der aus Silikon gebildeten Polstereinheit 10b mit dem in der Polstereinheit 10b befindlichen Inlay 18b erfolgen kann, ohne dass sich das Inlay 18b verformt.

Zur Anbindung der Armlehnenvorrichtung 20b an die Grundplatte des Rahmens der Armlehne weist das Inlay 18b mehrere Formschlusselemente 52b auf. Die Formschlusselemente 52b sind dabei an einer Unterseite des Inlays 18b angeordnet, die in einem montierten Zustand der Grundplatte zugewandt ist. Die Formschlusselemente 52b sind einstückig mit dem Inlay 18b ausgebildet. Die Formschlusselemente 52b sind dabei als Rasthaken ausgebildet, die in montiertem Zustand in nicht näher dargestellte Rastelemente der Grundplatte einrasten und die Armlehnenvorrichtung 20b fest an die Grundplatte anbinden. Grundsätzlich ist es auch denkbar, dass die Armlehnenvorrichtung 20b mittels einer anderen, dem Fachmann als sinnvoll erscheinenden Verbindungsmethode, beispielsweise durch eine Klebeverbindung oder eine andere form- und/oder kraftschlüssige Verbindung, fest mit der Grundplatte verbunden ist.

### Bezugszeichen

- 10: Polstereinheit
- 12: Komfortstruktur
- 14: Auflagefläche
- 16: Beschichtung
- 18: Inlay
- 20: Armlehnenvorrichtung
- 22: Armlehne
- 24: Grundplatte
- 26: vorderes Ende
- 28: innere Seite
- 30: äußere Seite
- 32: Unterseite
- 34: Befestigungsdom
- 36: Innenseite
- 38: Außenseite
- 40: Taschen
- 42: Formschlusselement
- 44: Formschlusselement
- 46: Formschlusselement
- 48: Rahmen
- 50: Gitterstruktur
- 52: Formschlusselement

## Patentansprüche

1. Armlehnenvorrichtung für einen Flugzeugsitz, mit einer Polstereinheit (10b), die zumindest im Wesentlichen aus einem Elastomer gebildet ist und die zumindest zur Bildung eines elastischen Untergrunds für eine Armauflage für einen Gast vorgesehen ist, wobei die Polstereinheit (10b) eine Komfortstruktur (12b) aufweist, die zur Einstellung einer elastischen Verformbarkeit der Polstereinheit (10b) vorgesehen ist, wobei die Polstereinheit (10b) zumindest im Wesentlichen aus einem Silikon gebildet ist, und mit einem Inlay (18b), das von der zumindest im Wesentlichen aus einem Silikon gebildeten Polstereinheit (10b) zumindest im Wesentlichen umgeben ist, **dadurch gekennzeichnet, dass** das Inlay (18b) mittels einer adhäsiven und/oder stoffschlüssigen Verbindung mit der Polstereinheit (10b) verbunden ist, wobei der Mittelbereich des Inlays (18b) von einer Gitterstruktur (50b) gebildet ist.

2. Armlehnenvorrichtung nach Anspruch 1, **dadurch gekennzeichnet, dass** die Komfortstruktur (12b) als eine ebene Polygonnetzstruktur ausgebildet ist, wobei die Komfortstruktur (12b) aneinander angrenzende wabenförmige Taschen (40a) oder aneinander angrenzende rechteckige Taschen (40b) ausbildet, die die gesamte Komfortstruktur (12b) ausbilden.

3. Armlehnenvorrichtung nach Anspruch 1 oder 2, **dadurch gekennzeichnet, dass** die Polstereinheit (10b) eine Auflagefläche (14b) aufweist und die Komfortstruktur (12b) auf einer der Auflagefläche (14b) abgewandten Seite der Polstereinheit (10b) angeordnet ist.

4. Armlehnenvorrichtung nach einem der vorhergehenden Ansprüche, **dadurch gekennzeichnet, dass**
die Komfortstruktur (12b) von einer filigranen Struktur gebildet ist.

5. Armlehnenvorrichtung nach einem der vorhergehenden Ansprüche, **gekennzeichnet durch** eine Beschichtung (16b), die die Polstereinheit (10b) zum Schutz zumindest teilweise umschließt.

6. Armlehnenvorrichtung nach Anspruch 1, **dadurch gekennzeichnet, dass** das Inlay (18b) zumindest im Wesentlichen aus einem hochtemperaturbeständigen Material gebildet ist.

7. Armlehnenvorrichtung zumindest nach Anspruch 1 oder 6, **dadurch gekennzeichnet, dass** das Inlay (18b) zumindest im Wesentlichen aus einem Faserverbundwerkstoff gebildet ist.

8. Sitz mit einer Armlehnenvorrichtung (20b) nach einem der vorhergehenden Ansprüche.

## Claims

1. Armrest device for an aircraft seat,
with a cushion unit (10b), which is at least substantially implemented by an elastomer and is configured at least to form an elastic substrate for an arm support for a passenger, wherein the cushion unit (10b) comprises a comfort structure (12b), which is configured for an adjustment of an elastic deformability of the cushion unit (10b), wherein the cushion unit (10b) is implemented at least substantially of a silicone,
and with an inlay (18b), which is at least substantially encompassed by the cushion unit (10b) that is at least substantially implemented of a silicone,
**characterised in that**
the inlay (18b) is connected to the cushion unit (10b) by an adhesive bond and/or by substance-to-substance bond, wherein a middle region of the inlay (18b) is implemented by a lattice structure (50b).

2. Armrest device according to claim 1, **characterised in that** the comfort structure (12b) is realized as a planar polygonal grid structure, wherein the comfort structure (12b) forms honeycomb-shaped pockets (40a) which are adjacent to one another or rectangular pockets (40b) which are adjacent to one another, said pockets (40a, 40b) implementing the entire comfort structure (12b).

3. Armrest device according to claim 1 or 2, **characterised in that** the cushion unit (10b) comprises a support surface (14b) and the comfort structure (12b) is arranged on a side of the cushion unit (10b) that faces away from the support surface (14b).

4. Armrest device according to one of the preceding claims, **characterised in that** the comfort structure (12b) is implemented by a filigree structure.

5. Armrest device according to one of the preceding claims, **characterised by** a coating (16b) at least partially encompassing the cushion unit (10b) for the purpose of protection.

6. Armrest device according to claim 1, **characterised in that** the inlay (18b) is at least substantially implemented by a high-temperature resistant material.

7. Armrest device at least according to claim 1 or 6, **characterised in that** the inlay (18b) is implemented at least substantially by a fiber-reinforced composite material.

8. Seat with an armrest device (20b) according to one of the preceding claims.

## Revendications

1. Dispositif d'accoudoir pour un siège d'aéronef,
avec une unité rembourrage (10b) implémentée au moins sensiblement d'un élastomère et prévue au moins pour une réalisation d'un substrat élastique pour un support de bras pour un passager,
l'unité rembourrage (10b) comprenant une structure de confort (12b) prévue pour un ajustement d'une déformabilité élastique de l'unité rembourrage (10b),
l'unité rembourrage (10b) étant implémentée au moins sensiblement d'une silicone,
et avec un inlay (18b) au moins sensiblement entouré de l'unité rembourrage (10b) implémentée au moins sensiblement d'une silicone,
**caractérisé en ce que**
l'inlay (18b) est raccordée à l'unité rembourrage (10b) par le biais d'une liaison adhésive et/ou une liaison par accouplement de matière, une zone centrale de l'inlay (18b) étant réalisée d'une structure réseau (50b).

2. Dispositif d'accoudoir selon la revendication 1, **caractérisé en ce que** la structure de confort (12b) est implémentée comme structure de réseau polygonal,
la structure de confort (12b) formant des pochettes (40a) en forme alvéolaire adjacentes l'une à l'autre ou des pochettes (40b) rectangulaires adjacentes l'une à l'autre, lesdites pochettes (40a, 40b) formant l'entière structure de confort (12b).

3. Dispositif d'accoudoir selon l'une quelconque des revendications 1 ou 2,
**caractérisé en ce que** l'unité rembourrage (10b) comporte une surface de support (14b) et la structure de confort (12b) est disposée à un côté de l'unité rembourrage (10b) détourné de la surface de support (14b).

4. Dispositif d'accoudoir selon l'une quelconque des revendications précédentes, **caractérisé en ce que** la structure de confort (12b) est réalisée d'une structure filigrane.

5. Dispositif d'accoudoir selon l'une quelconque des revendications précédentes, **caractérisé par** un revêtement (16b) au moins partiellement entourant l'unité rembourrage (10b) pour le bût de protection.

6. Dispositif d'accoudoir selon la revendication 1, **caractérisé en ce que** l'inlay (18b) est implémenté au moins sensiblement d'un matériau stable à haute température.

7. Dispositif d'accoudoir au moins selon l'une quelconque des revendications 1 ou 6, **caractérisé en ce que** l'inlay (18b) est implémenté au moins sensiblement d'un matériau composite en fibres.

8. Siège avec un dispositif d'accoudoir (20b) selon l'une quelconque des revendications précédentes.
